# EUROPEAN PATENT SPECIFICATION

(11) **EP 2 153 256 B1**
(45) Date of publication and mention of the grant of the patent: **01.03.2017**
(21) Application number: 08795836.9
(22) Date of filing: 06.05.2008
(51) Int. Cl.: G02B 5/20

(54) **LIGHT DIFFUSING SOLAR CONTROL FILM**
LICHTDIFFUNDIERENDER SOLARSTEUERFILM
FILM DE PROTECTION SOLAIRE DIFFUSANT LA LUMIÈRE

(30) Priority: 23.05.2007 US 752368
(43) Date of publication of application: 17.02.2010
(73) Proprietor: 3M Innovative Properties Company, St. Paul, MN 55133-3427 (US)
(72) Inventor: PADIYATH, Raghunath, Saint Paul, Minnesota 55133-3427 (US); HUNTLEY, Douglas A., Saint Paul, Minnesota 55133-3427 (US)
(74) Representative: Vossius & Partner Patentanwälte Rechtsanwälte mbB
(86) International application number: PCT/US2008/062755
(87) International publication number: WO 2008/144217

(56) References cited:
- EP-A1- 0 617 300
- WO-A1-00/11502
- WO-A2-2006/074168
- US-A- 5 332 888
- US-A- 6 030 671
- US-A1- 2006 291 055
- US-B1- 6 185 039
- US-B2- 6 929 864

## Description

### FIELD

The present disclosure relates generally to light diffusing solar control films and particularly to light diffusing solar control laminates and light diffusing solar control glazing units.

### BACKGROUND

The need for energy efficient windows and glazing systems is known. The choice of a particular type of window depends of a number of factors including UV, visible and optical performance, aesthetics and climatic conditions. In cooling dominated climates, a glazing unit having low solar heat gain coefficient and low insulating properties may be adequate while in heating dominated climates a moderate solar heat gain along with high insulating properties are needed.

Low emissivity (Low-e) coatings reflect mid to far infrared energy and are used in insulated glazing units. Low-e windows are especially useful in heating dominated climates. Two types of Low-e coatings exist. Pyrolytic Low-e coatings, commonly referred to as "hard coats" are applied during the manufacture of glass while sputtered Low-e coatings are applied in a vacuum process, commonly referred to as" soft coats", after the glass plate is manufactured. The hard Low-e coatings are more durable and may be stored indefinitely prior to window manufacture. The soft coats typically comprise silver or silver alloys and are easily attacked by the atmospheric elements such as moisture, salt and water. Furthermore, during the construction of the window, a practice known as "edge deletion" is performed to reduce the coating edge from such attacks.

Commonly known methods (absorbing films and/or window shades) for reducing solar heat gain and glare also reduce visible light transmission by as much as 80%. As a result, under overcast sky, artificial lighting must be used which results in increased energy usage.

US2006/0291055 A1 discloses an optical article having a reflective polarizer, a light diffusing layer, and an adhesive layer disposed between the reflective polarizer and the light diffusing layer.

### BRIEF SUMMARY

The present disclosure relates to light diffusing solar control films and particularly to light diffusing solar control laminates and light diffusing solar control glazing units. The present disclosure is directed to a light diffusing layer disposed on a light visible light transmitting and infrared light reflecting multilayer film. The solar control films described herein provide improved illumination of a building interior while minimizing unwanted solar gain through the window.

In a first embodiment, a light diffusing solar control film as defined by independent claim 1 includes a multilayer film that transmits visible light and reflects infrared light, and a light diffusing layer or surface is adjacent to the multilayer film forming a light diffusing solar control film. The light diffusing solar control film has a haze value of 10% or greater.

In another embodiment, a light diffusing solar control glazing unit as defined by claim 5 includes a glass substrate, and a light diffusing solar control film disposed on the glass substrate. The light diffusing solar control film includes s a multilayer film that transmits visible light and reflects infrared light, and a light diffusing layer or surface is adjacent to the multilayer film forming a light diffusing solar control film. The light diffusing solar control film has a haze value of 10% or greater.

### BRIEF DESCRIPTION OF THE DRAWINGS

The invention may be more completely understood in consideration of the following detailed description of various embodiments of the invention in connection with the accompanying drawings, in which:
**FIG. 1** is a schematic cross-sectional view of an illustrative solar control laminate;
**FIG. 2** is a schematic cross-sectional view of an illustrative solar control glazing unit; and
**FIG. 3** is an illustrative transmission and reflection spectrum for the solar control film Fasara Milano example.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

In the following description, reference is made to the accompanying drawings that form a part hereof, and in which are shown by way of illustration several specific embodiments.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

The term "polymer" will be understood to include polymers, copolymers (e.g., polymers formed using two or more different monomers), oligomers and combinations thereof, as well as polymers, oligomers, or copolymers that can be formed in a miscible blend.

The term "adjacent" refers to the relative position of two elements that are close to each other and may or may not be in contact with each other or have one or more layers separating the two elements.

The present disclosure relates to light diffusing solar control films and particularly to light diffusing solar control laminates and light diffusing solar control glazing units. The present disclosure is directed to a light diffusing layer or surface disposed on a light visible light transmitting and infrared light reflecting multilayer film. The solar control films described herein provide improved illumination of a building interior while minimizing unwanted solar gain through the window. While the present invention is not so limited, an appreciation of various aspects of the invention will be gained through a discussion of the examples provided below.

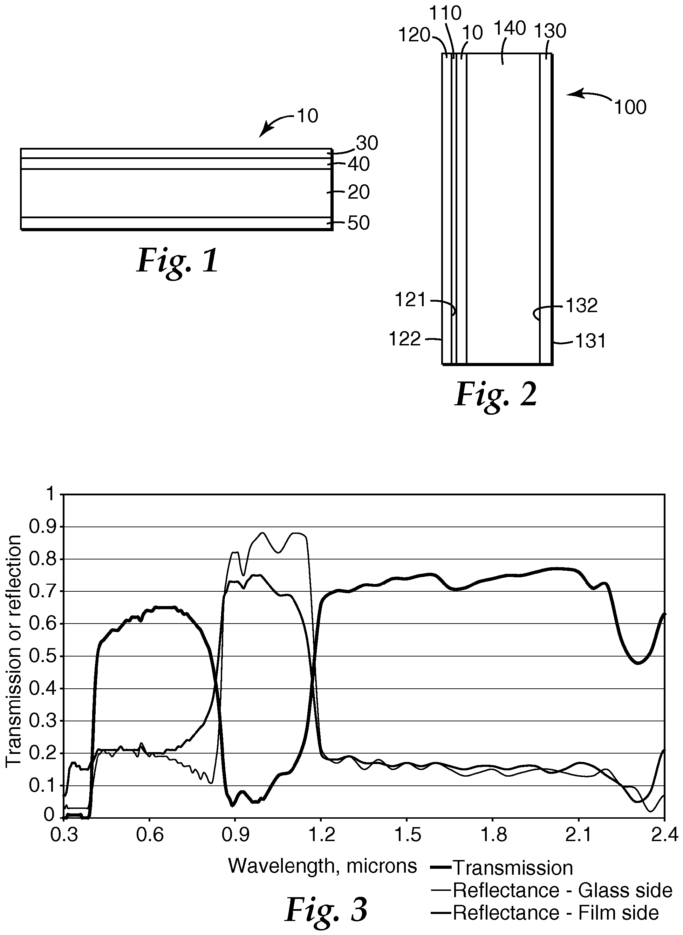

**FIG. 1** is a schematic cross-sectional view of an illustrative solar control laminate **10**. The solar control laminate **10** includes a multilayer film **20** and a light diffusing layer or surface **30**. In many embodiments, the multilayer film **20** and a light diffusing layer **30** are joined together with an adhesive layer **40** or adhesion promoting layer (e.g., corona treatment layer, or priming layer). In some embodiments, the multilayer film **20** and a light diffusing layer **30** are integrally formed via, for example, co-extrusion where a skin layer of the multilayer film **20** provides the light diffusion functionality. The light diffusing surface **30** can be a surface of a light diffusing layer or a surface of the multilayer film **20**. In some embodiments, an infrared light absorbing layer **50** is disposed on the multilayer film **20**.

The multilayer film **20** transmits visible light and reflects infrared light. According to the invention, the multilayer film **20** transmits at least 50% of all visible light wavelengths and reflects at least 50% of infrared light from 850 nm to 1100 nm. In some embodiments, the multilayer film **20** transmits at least 60% of all visible light wavelengths and reflects at least 60% of infrared light from 850 nm to 1100 nm or at least 60% of all wavelengths of infrared light. In some embodiments, the multilayer film **20** transmits at least 75% of all visible light wavelengths and reflects at least 75% of infrared light from 850 nm to 1100 nm. In some embodiments, the multilayer film **20** transmits at least 90% of all visible light wavelengths and reflects at least 90% of infrared light from 850 nm to 1100 nm. The multilayer film **20** can be formed of any useful materials.

In some embodiments, the multilayer film **20** is a multilayer Fabry-Perot interference filter including a plurality of metal layers. These layers can include any useful metal or metallic material such as, for example, gold, silver, copper and oxides and/or alloys thereof. There multilayer metallic films have multiple thin metal layers that cooperate to reflect near infrared and infrared light, while allowing the transmission of visible light. Examples of these useful multilayer multilayer Fabry-Perot interference filter films are described in U.S. Patent Nos. 4,799, 745 and 6,007,901.

The multilayer film **20** is a multilayer polymeric film that includes a plurality of alternating polymeric layers of a first polymer material and a second polymer material and at least one of the alternating layers is birefringent and orientated and the alternating polymeric layers cooperate to reflect infrared light and visible light is transmitted through the multilayer polymeric infrared light reflecting film. The layers may have different refractive index characteristics so that some infrared light is reflected at interfaces between adjacent layers. The layers may be sufficiently thin so that light reflected at a plurality of the interfaces undergoes constructive or destructive interference in order to give the film the desired reflective and transmissive properties. For optical films designed to reflect light at near-infrared or infrared wavelengths, each layer generally has an optical thickness (i.e., a physical thickness multiplied by refractive index) of less than about 1 micrometer. Thicker layers can, however, also be included, such as skin layers at the outer surfaces of the film, or protective boundary layers disposed within the film that separate packets of layers.

The reflective and transmissive properties of the multilayer polymeric infrared light reflecting film are a function of the refractive indices of the respective layers (i.e., microlayers). Each layer can be characterized at least in localized positions in the film by in-plane refractive indices nₓ, ny, and a refractive index n_{z} associated with a thickness axis of the film. These indices represent the refractive index of the subject material for light polarized along mutually orthogonal x-, y-, and z-axes, respectively. In practice, the refractive indices are controlled by judicious materials selection and processing conditions. The multilayer polymeric infrared light reflecting film can be made by co-extrusion of typically tens or hundreds of layers of two alternating polymers A, B, followed by optionally passing the multilayer extrudate through one or more multiplication dies, and then stretching or otherwise orienting the extrudate to form a final film. The resulting film is composed of typically tens or hundreds of individual layers whose thicknesses and refractive indices are tailored to provide one or more reflection bands in desired region(s) of the spectrum, such as in the visible, near infrared, and/or infrared. In order to achieve high reflectivities with a reasonable number of layers, adjacent layers preferably exhibit a difference in refractive index for light polarized along the x-axis of at least 0.05. In some embodiments, if the high reflectivity is desired for two orthogonal polarizations, then the adjacent layers also exhibit a difference in refractive index for light polarized along the y-axis of at least 0.05. In other embodiments, the refractive index difference can be less than 0.05 or 0 to produce a multilayer stack that reflects normally incident light of one polarization state and transmits normally incident light of an orthogonal polarization state.

If desired, the refractive index difference between adjacent layers for light polarized along the z-axis can also be tailored to achieve desirable reflectivity properties for the p-polarization component of obliquely incident light. For ease of explanation, at any point of interest on a multilayer optical film the x-axis will be considered to be oriented within the plane of the film such that the magnitude of Δnx is a maximum. Hence, the magnitude of Δn_{y} can be equal to or less than (but not greater than) the magnitude of Δnₓ. Furthermore, the selection of which material layer to begin with in calculating the differences Δnₓ, Δn_{y}, Δn_{z} is dictated by requiring that Δnₓ be non-negative. In other words, the refractive index differences between two layers forming an interface are Δnj = n₁ⱼ - n₂ⱼ, where j = x, y, or z and where the layer designations 1, 2 are chosen so that n₁ₓ ≥ n₂ₓ., i.e., Δnx ≥ 0.

To maintain high reflectivity of p-polarized light at oblique angles of incidence, the z-index mismatch Δn_{z} between layers can be controlled to be substantially less than the maximum in-plane refractive index difference Δnₓ, such that Δn_{z} ≤ 0.5*Δnₓ. More preferably, Δn_{z} ≤ 0.25*Δnₓ. A zero or near zero magnitude z-index mismatch yields interfaces between layers whose reflectivity for p-polarized light is constant or near constant as a function of incidence angle. Furthermore, the z-index mismatch Δn_{z} can be controlled to have the opposite polarity compared to the in-plane index difference Δnₓ, i.e. Δn_{z} < 0. This condition yields interfaces whose reflectivity for p-polarized light increases with increasing angles of incidence, as is the case for s-polarized light.

Multilayer optical films have been described in, for example, US Patent 3,610,724 (Rogers); US Patent 3,711,176 (Alfrey, Jr. et al.), "Highly Reflective Thermoplastic Optical Bodies For Infrared, Visible or Ultraviolet Light"; US Patent 4,446,305 (Rogers et al.); US Patent 4,540,623 (Im et al.); US Patent 5,448,404 (Schrenk et al.); US Patent 5,882,774 (Jonza et al.) "Optical Film"; US Patent 6,045,894 (Jonza et al.) "Clear to Colored Security Film"; US Patent 6,531,230 (Weber et al.) "Color Shifting Film"; PCT Publication WO 99/39224 (Ouderkirk et al.) "Infrared Interference Filter"; and US Patent Publications 2001/0022982 A1 (Neavin et al.), "Apparatus For Making Multilayer Optical Films"; 2006/0154049 A1 (Padiyath et al.), "Solar Control Multilayer Film". In such polymeric multilayer optical films, polymer materials are used predominantly or exclusively in the makeup of the individual layers. Such films can be compatible with high volume manufacturing processes, and may be made in large sheets and roll goods.

The multilayer polymeric infrared light reflecting film can be formed by any useful combination of alternating polymer type layers. At least one of the alternating polymer layers is birefringent and oriented. In some embodiments, one of the alternating polymer layer is birefringent and orientated and the other alternating polymer layer is isotropic. The multilayer optical film is formed by alternating layers of a first polymer type including polyethylene terephthalate (PET) or copolymer of polyethylene terephthalate (coPET) and a second polymer type including poly(methyl methacrylate) (PMMA) or a copolymer of poly(methyl methacrylate) (coPMMA). Useful combination of alternating polymer type layers are disclosed in US 6,352,761.

The light diffusing layer 30 includes light scattering particles that are dispersed within a binder capable of providing bulk diffusion of light. The light scattering particles and the binder have different refractive indices. In many embodiments, the light scattering particles have a first refractive index and the binder has a second refractive index and the second refractive index is at least a value of 0.05 different than the first refractive index. In some embodiments, the light scattering particles have a first refractive index and the binder has a second refractive index and the second refractive index is at least a value of 0.1 different than the first refractive index. The light diffusing layer 30 provides the solar control films 10 with a haze value of at least 10% or greater or at least 30% or greater, or at least 50% or greater. Haze is measured according to ASTM D 1003-00. In some embodiments, the light diffusing layer **30** provides the solar control films **10** with a haze value range from 10% to 95%, or from 20% to 75%. The particles can be formed of any useful light scattering material and can have any useful size and loading within the binder. In many embodiments, the particles have an approximate diameter in a range from 1 to 25 micrometers and a refractive index in a range from 1.5 to 1.6. Illustrative light diffusing layers are described in U.S. Patent No. 6,163,402 and WO 2005/005162 which described illustrative printed light diffusing layers.

The light diffusing surface **30** includes a textured surface or topography capable of scattering light (i.e., surface light diffusion) as light transmits through the light diffusing surface **30**. The textured surface or topography can be formed using any useful technique. In some embodiments, the textured surface is formed via embossing or erosion (e.g., sandblasting). In other embodiments, the textured surface is formed via casting onto a textured master surface. The textured surface is defined by a plurality of peaks and valleys that are randomly or non-randomly placed or formed along a surface. These peaks and valleys are effective to disperse or diffuse light that transmits through the light diffusing surface **30.** The light diffusing surface **30** provides the solar control films **10** with a haze value of at least 10% or greater or at least 30% or greater, or at least 50% or greater. Haze is measured according to ASTM D 1003-00. In some embodiments, the light diffusing surface **30** provides the solar control films **10** with a haze value range from 10% to 95%, or from 20% to 75%.

The light diffusing layer or surface **30** described herein can be formed of any useful polymeric material. Illustrative polymeric materials include any one or more the of the polymer materials for any of the layers described in the present disclosure.

In some embodiments, an infrared light absorbing layer **50** is disposed on the multilayer film **20**. In these embodiments, the infrared light absorbing layer **50** includes a metal oxide dispersed within a cured polymeric binder. In some embodiments, this infrared light absorbing layer **50** has a thickness in a range from 1 to 20 micrometers, or from 1 to 10 micrometers, or from 1 to 5 micrometers. This infrared light absorbing layer **50** can include a plurality of metal oxide nanoparticles. A partial listing of metal oxide nanoparticles includes tin, antimony, indium and zinc oxides and doped oxides. In some embodiments, the metal oxide nanoparticles include, tin oxide, antimony oxide, indium oxide, indium doped tin oxide, antimony doped indium tin oxide, antinomy tin oxide, antimony doped tin oxide or mixtures thereof. In some embodiments, the metal oxide nanoparticles include tin oxide or doped tin oxide and optionally further includes antimony oxide and/or indium oxide. The polymeric binder layer includes infrared radiation absorbing nanoparticles dispersed through the polymeric binder layer. The infrared radiation absorbing nanoparticles may include any material that preferentially absorbs infrared radiation. Examples of suitable materials include metal oxides such as tin, antimony, indium and zinc oxides and doped oxides. In some instances, the metal oxide nanoparticles include, tin oxide, antimony oxide, indium oxide, indium doped tin oxide, antimony doped indium tin oxide, antinomy tin oxide, antimony doped tin oxide or mixtures thereof. In some embodiments, the metal oxide nanoparticles include antimony oxide (ATO) and/or indium tin oxide (ITO). In some cases, the infrared radiation absorbing nanoparticles may include or be made of lanthanum hexaboride, or LaB6.

Lanthanum hexaboride is an effective near IR (NIR) absorber, with an absorption band centered on 900 nm. The infrared radiation absorbing nanoparticles can be sized such that they do not materially impact the visible light transmission of the polymeric binder layer. In some instances, the infrared radiation absorbing nanoparticles may have any useful size such as, for example, 1 to 100, or 30 to 100, or 30 to 75 nanometers.

The nanoparticles can have any useful size such as, for example, 1 to 100, or 30 to 100, or 30 to 75 nanometers. In some embodiments, the metal oxide nanoparticles include antimony tin oxide or doped antimony tin oxide dispersed in a polymeric material. The polymeric material can be any useful binder material such as, for example, polyolefin, polyacrylate, polyester, polycarbonate, fluoropolymer, and the like.

In some embodiments, the infrared light absorbing layer **50** binder and/or light diffusing layer or surface **30** binder is a cured polymeric material that can function as a hardcoat. Suitable polymeric binders to form the infrared light absorbing nanoparticle layer include the thermal and/or U.V.-polymerized (i.e., cured) products of acrylate and/or methacrylate monomers. A suitable cured binder is the thermal and/or U.V.-polymerized product of a brominated, alkyl-substituted phenyl acrylate or methacrylate (e.g., 4,6-dibromo-2-sec-butyl phenyl acrylate), a methyl styrene monomer, a brominated epoxy diacrylate, 2-phenoxyethyl acrylate, and a hexa-functional aromatic urethane acrylate oligomer, as described in U.S. Pat. No. 6,355,754. While most types of energy polymerizable telechelic monomers and oligomers are useful for forming these polymeric binders, acrylates are preferred because of their high reactivity. The curable binder composition should be of flowable viscosity that is low enough that air bubbles do not become entrapped in the composition. Reactive diluents can be mono- or di-functional monomers such as, for example, SR-339, SR-256, SR-379, SR-395, SR-440, SR-506, Cod-611, SR-212, SR-230, SR-238, and SR-247 available from Sartomer Co., Exton, Pa. Typical useful oligomers and oligomeric blends include CN-120, CN-104, CN-115, CN-116, CN-117, CN-118, CN-119, CN-970A60, CN-972, CN-973A80, CN-975 available from Sartomer Co., Exton, Pa. and Ebecryl 1608, 3200, 3201, 3302, 3605, 3700, 3701, 608, RDX-51027, 220, 9220, 4827, 4849, 6602, 6700-20T available from Surface Specialties, Smyrna, Ga. Additionally, a multi-functional crosslinker can assist in providing a durable, high crosslink density composite matrix. Examples of multi-functional monomers include SR-295, SR-444, SR-351, SR-399, SR-355, and SR-368 available from Sartomer Co., Exton, Pa. and PETA-K, PETIA and TMPTA-N available from Surface Specialties, Smyrna, Ga. Multi-functional monomers can be used as crosslinking agents to increase the glass transition temperature of the binder polymer that results from the polymerizing of the polymerizable composition.

The infrared light absorbing layer **50** binder and/or light diffusing layer or surface **30** binder can form a hard resin or hardcoat. The term "hard resin" or "hardcoat" means that the resulting cured polymer exhibits an elongation at break of less than 50 or 40 or 30 or 20 or 10 or 5 percent when evaluated according to the ASTM D-882-91 procedure. In some embodiments, the hard resin polymer can exhibit a tensile modulus of greater than 100 kpsi (6.89.times.10.sup.8 pascals) when evaluated according to the ASTM D-882-91 procedure. In some embodiments, the hard resin polymer can exhibit a haze value of less than 10% or less than 5% when tested in a Taber abrader according to ASTM D 1044-99 under a load of 500 g and 50 cycles (haze can be measured with Haze-Gard Plus, BYK-Gardner, Md., haze meter.

In some infrared light absorbing layer **50** embodiments, the metal oxide nanoparticles include indium tin oxide or doped indium tin oxide dispersed in a polymeric material. The nanoparticle layer can have any useful thickness such as, for example, from 1 to 10 or 2 to 8 micrometers. The nanoparticle layer can include nanoparticles at any useful loading or wt % such as, for example, 30 to 90 wt %, 40 to 80 wt %, or 50 to 80 wt %. In many embodiments, the nanoparticle layer is nonconducting. Nanoparticle compositions are commercially available from, for example, Advanced Nano Products Co., LTD., South Korea, under the trade designation TRB-PASTE SM6080(B), SH7080, SL6060. In another embodiment, the metal oxide nanoparticles include zinc oxide and/or aluminum oxide, such oxides are available from GfE Metalle und Materialien GmbH, Germany.

The solar control film **10** can include an adhesive layer such as, for example, a pressure sensitive adhesive layer (with an optional release liner), on either exposed surface of the solar control film. The pressure sensitive adhesive (PSA) layer **110** (**Fig. 2**) can any type of adhesive that enables the solar control multilayer film to be affixed to a glazing substrate such as glass. In order to attach the solar control film to the glass, one surface of the solar control film is coated with the pressure-sensitive adhesive (PSA) and a release sheet is removed from the PSA before application of the film to the glass.

Ultra-violet absorption additives can be incorporated into the PSA. The UV absorber may include a benzotriazole, benzatriazine, benizophenone, or a combination thereof; or it may, be any of those described in U.S. 2004/0241469 A1; U.S. 2004/10242735 A1; and U.S. Pat. No. 6,613,819 B2.

Some examples include CGL 139, CGL 777, and Tinuvin™ 327, 460, 479, 480, 777, 900, and 928; all from Ciba Specialty Chemicals.

In many embodiments, the PSA is an optically clear PSA film such as a polyacrylate pressure sensitive adhesive. The Pressure-Sensitive Tape Council has defined pressure sensitive adhesives as material with the following properties: (1) aggressive and permanent tack, (2) adherence with no more than finger pressure, (3) sufficient ability to hold onto an adherand, (4) sufficient cohesive strength, and (5) requires no activation by an energy source. PSAs are normally tacky at assembly temperatures, which is typically room temperature or greater. Materials that have been found to function well as PSAs are polymers designed and formulated to exhibit the requisite viscoelastic properties resulting in a desired balance of tack, peel adhesion, and shear holding power at the assembly temperature. The most commonly used polymers for preparing PSAs are natural rubber-, synthetic rubber- (e.g., styrene/butadiene copolymers (SBR) and styrene/isoprene/styrene (SIS) block copolymers), silicone elastomer-, poly alpha-olefin-, and various (meth) acrylate- (e.g., acrylate and methacrylate) based polymers. Of these, (meth)acrylate-based polymer PSAs have evolved as a preferred class of PSA for the present invention due to their optical clarity, permanence of properties over time (aging stability), and versatility of adhesion levels, to name just a few of their benefits.

The release liner described above can be formed of any useful material such as, for example, polymers or paper and may include a release coat. Suitable materials for use in release coats include, but are not limited to, fluoropolymers, acrylics and silicones designed to facilitate the release of the release liner from the adhesive.

**FIG. 2** is a schematic cross-sectional view of an illustrative solar control glazing unit **100.** The illustrated glazing unit **100** includes a first glazing substrate **120** and a second glazing substrate **130**, however it is contemplated that a single glazing substrate may be utilized. The first glazing substrate **120** includes an inner surface **121** and an outer surface **122.** The second glazing substrate **130** includes an inner surface **131** and an outer surface **132.** The solar control **10**, described above, is fixed to the first glazing substrate **120** inner surface **121** via an adhesive layer **110**, as described above. The illustrated solar control glazing unit **100** is an insulated glazing unit where the solar control **10** is fixed between the glass substrates **120, 130** and the glass substrates **120, 130** form a sealed volume of gas **140** between the glass substrates **120, 130**.

In one embodiment, the glazing substrate **120, 130** is disposed between the multilayer film **20** and a light diffusing layer **30**, forming the solar control laminate. The multilayer film **20** and a light diffusing layer **30** can be adhered to the glazing substrate **120, 130** via any adhesive or adhesion promoting layer described above.

In many embodiments, the solar control film **10** is disposed on only a portion of the glazing unit. For example, solar control film **10** is disposed on only a portion of the surface area of the glass substrate. In some embodiments, the solar control film **10** is disposed on less than 75 % of the surface area of the glass substrate, or less than 50 % of the surface area of the glass substrate.

The first glazing substrate and the second glazing substrate may be formed of any suitable glazing material. In some instances, the glazing substrates may be selected from a material that possesses desirable optical properties at particular wavelengths including visible light. In some cases, the glazing substrates may be selected from materials that transmit substantial amounts of light within the visible spectrum. In some instances, the first glazing substrate and/or the second glazing substrate may each be selected from materials such as glass, quartz, sapphire, and the like. In particular instances, the first glazing substrate and the second glazing substrate are both glass.

In many embodiments, the solar control glazing unit **100** transmits visible light and reflects visible light. In many embodiments, the solar control glazing unit **100** transmits at least 50% of visible light from 500 nm to 800 nm and reflects at least 50% of infrared light from 850 nm to 1150 nm. In other embodiments, the solar control glazing unit **100** transmits at least 60% of visible light from 525nm to 750 nm and reflects at least 80% of infrared light from 900 nm to 1100 nm. In further embodiments, the solar control glazing unit **100** transmits at least 40% of visible light from 500 nm to 800 nm and reflects at least 50% of infrared light from 850 nm to 1150 nm. In other embodiments, the solar control glazing unit **100** transmits at least 40% of visible light from 525nm to 750 nm and reflects at least 80% of infrared light from 900 nm to 1100 nm.

### EXAMPLES

The following materials were used in the Examples, where indicated:
CM 875: a 2 mil (nominal) Quarter wave multilayer IR reflecting film comprising 224 alternating layers of PET and coPMMA as described in US 6,797,396 (for example, see Example 5).
Fasara San Marino decorative film available from 3M Company.
Fasara Milano decorative film available from 3M Company.
Clear glass: 2mm or 6mm clear glass available from PPG Industries.

Optical spectra were measured using a Lambda 19 spectrophotometer (Perkin Elmer, Boston, MA). The spectra were imported into Optics5 and Window 5.2 programs available from Lawrence Berkeley National Laboratories for analyzing thermal and optical properties of glazing systems. Performance characteristics such as visible light transmission (Tvis), shading coefficient, and reflectance (glass side and film side), were determined using the Window 5.2 program. The programs can be downloaded from http://windows.lbl.gov/software/. The results of these measurements are shown in Table 1.

An infrared reflecting multilayer polymeric film CM 875 was laminated to a Fasara San Marino decorative film and a Fasara Milano decorative film using an optical adhesive (8141 optically clear adhesive available from 3M Company) to form the solar control film. This solar control film was than laminated onto clear glass with a pressure sensitive adhesive and the solar rejection properties were measured and compared to the decorative film on glass and reported in Table 1 below.

**Table 1**

| **Sample** | **Shading Coefficient** | **Visible light transmission** |
|---|---|---|
| Fasara San Marino | 0.67 | 43% |
| Fasara Milano | 0.81 | 62% |
| IR Reflecting Fasara San Marino | 0.54 | 43% |
| IR Reflecting Fasara Milano | 0.64 | 62% |

**FIG. 3** is an illustrative transmission and reflection spectrum for the solar control film Fasara Milano example.

Thus, embodiments of the LIGHT DIFFUSING SOLAR CONTROL FILM are disclosed.

## Claims

1. A light diffusing solar control film comprising:
a multilayer polymeric film including a plurality of alternating polymeric layers of a first polymer material and a second polymer material, at least one of the alternating polymeric layers being birefringent and oriented, wherein the alternating polymeric layers cooperate to reflect at least 50% of infrared light from 850 nm to 1100 nm and to transmit at least 50% of visible light through the multilayer polymeric film, wherein the first polymer material includes polyethylene terephthalate (PET) or a copolymer of polyethylene terephthalate (coPET) and the second polymer material includes poly(methyl methacrylate) (PMMA) or a copolymer of poly(methyl methacrylate) (coPMMA); and
a light diffusing layer or a light diffusing surface adjacent to the multilayer polymeric film;
wherein, the light diffusing solar control film has a haze value of 10% or greater measured according to ASTM D 1003-00; and
wherein the light diffusing layer comprises particles dispersed within a binder, wherein the particles and the binder have different refractive indices; and
the light diffusing surface comprises a textured surface, wherein the textured surface comprises a plurality of peaks and valleys that are randomly or non-randomly placed.

2. A light diffusing solar control film according to claim 1, wherein the particles have a first refractive index, the binder has a second refractive index and the second refractive index is at least a value of 0.05 greater than or less than the first refractive index.

3. A light diffusing solar control film according to claim 1, wherein the multilayer film comprises a multilayer polymeric infrared light reflecting film comprising a plurality of alternating polymeric layers of a first polymer material and a second polymer material and at least one of the alternating layers is birefringent and orientated and the alternating polymeric layers cooperate to reflect infrared light and visible light is transmitted through the multilayer polymeric infrared light reflecting film.

4. A light diffusing solar control film according to claim 1, further comprising an infrared light absorbing nanoparticle layer disposed adjacent to the multilayer polymeric film, wherein the infrared absorbing nanoparticle layer comprises lanthanum hexaboride, antimony tin oxide, or indium tin oxide.

5. A light diffusing solar control glazing unit, comprising:
a glass substrate; and
a light diffusing solar control film disposed on the glass substrate, the light diffusing solar control film comprising:
a multilayer polymeric film including a plurality of alternating polymeric layers of a first polymer material and a second polymer material, at least one of the alternating polymeric layers being birefringent and oriented, wherein the alternating polymeric layers cooperate to reflect at least 50% of infrared light from 850 nm to 1100 nm and to transmit at least 50% of visible light through the multilayer polymeric film, wherein the first polymer material includes polyethylene terephthalate (PET) or a copolymer of polyethylene terephthalate (coPET) and the second polymer material includes poly(methyl methacrylate) (PMMA) or a copolymer of poly(methyl methacrylate) (coPMMA); and
a light diffusing layer or a light diffusing surface adjacent to the multilayer polymeric film;
wherein the light diffusing solar control film has a haze value of 10% or greater, measured according to ASTM D 1003-00; and
wherein the light diffusing layer comprises particles dispersed within a binder, wherein the particles and the binder have different refractive indices,
and the light diffusing surface comprises a textured surface, wherein the textured surface comprises a plurality of peaks and valleys that are randomly or non-randomly placed.

6. A light diffusing solar control glazing unit according to claim 5, wherein the light diffusing layer comprises particles dispersed within a binder, wherein the particles have a first refractive index, the binder has a second refractive index and the second refractive index is at least a value of 0.05 greater than or less than the first refractive index.

7. A light diffusing solar control glazing unit according to claim 5, further comprising a second glass substrate and the diffusing solar control film is disposed between the glass substrate and the second glass substrate.

8. A light diffusing solar control glazing unit according to claim 5, wherein the multilayer film comprises a multilayer polymeric infrared light reflecting film comprising a plurality of alternating polymeric layers of a first polymer material and a second polymer material and at least one of the alternating layers is birefringent and orientated and the alternating polymeric layers cooperate to reflect infrared light and visible light is transmitted through the multilayer polymeric infrared light reflecting film.

9. A light diffusing solar control glazing unit according to claim 5, further comprising an infrared light absorbing nanoparticle layer disposed adjacent to the multilayer film.

## Patentansprüche

1. Lichtdiffundierende Sonnenschutzfolie, aufweisend:
eine Mehrschicht-Polymerfolie mit mehreren alternierenden Polymerlagen aus einem ersten Polymermaterial und einem zweiten Polymermaterial, wobei mindestens eine der alternierenden Polymerlagen doppelbrechend und orientiert ist, und wobei die alternierenden Polymerlagen zusammenwirken, um mindestens 50 % des Infrarotlichts zwischen 850 nm und 1100 nm zu reflektieren und mindestens 50 % des sichtbaren Lichts durch die Mehrschicht-Polymerfolie zu übertragen, wobei das erste Polymermaterial Polyethylenterephthalat (PET) oder ein Copolymer von Polyethylenterephthalat (co-PET) aufweist, und das zweite Polymermaterial Polymethylmethacrylat (PMMA) oder ein Copolymer von Polymethylmethacrylat (coPMMA) aufweist; und
eine an die Mehrschicht-Polymerfolie angrenzende lichtdiffundierende Lage oder lichtdiffundierende Oberfläche;
wobei die lichtdiffundierende Sonnenschutzfolie einen entsprechend ASTM D 1003-00 gemessenen Haze-Wert von 10 % oder höher hat; und
wobei die lichtdiffundierende Lage Partikel einschließt, die in einem Bindemittel verteilt sind, wobei die Partikel und das Bindemittel über unterschiedliche Brechungsindexe verfügen; und
die lichtdiffundierende Oberfläche eine strukturierte Oberfläche aufweist, wobei die strukturierte Oberfläche mehrere Erhöhungen und Vertiefungen aufweist, die beliebig oder nicht-beliebig angeordnet sind.

2. Lichtdiffundierende Sonnenschutzfolie nach Anspruch 1, wobei die Partikel über einen ersten Brechungsindex verfügen, das Bindemittel über einen zweiten Brechungsindex und der zweite Brechungsindex mindestens um den Wert 0,05 größer oder kleiner ist als der erste Brechungsindex.

3. Lichtdiffundierende Sonnenschutzfolie nach Anspruch 1, wobei die Mehrschichtfolie eine Infrarotlicht reflektierende Mehrschicht-Polymerfolie umfasst, die mehrere abwechselnde Polymerschichten eines ersten Polymermaterials und eines zweiten Polymermaterials aufweist, und mindestens eine der abwechselnden Schichten doppelbrechend und ausgerichtet ist und die abwechselnden Polymerschichten zusammenwirken, um Infrarotlicht zu reflektieren, und sichtbares Licht durch die Infrarotlicht reflektierende Mehrschicht-Polymerfolie durchgelassen wird.

4. Lichtdiffundierende Sonnenschutzfolie nach Anspruch 1, ferner mit einer Infrarotlicht absorbierenden Nanoteilchenschicht, die angrenzend an die Mehrschicht-Polymerfolie angeordnet ist, wobei die infrarotabsorbierende Nanoteilchenschicht Lanthanhexaborid, Antimonzinnoxid oder Indiumzinnoxid umfasst.

5. Lichtdiffundierende Sonnenschutz-Verglasungseinheit, aufweisend:
ein Glassubstrat und
eine lichtdiffundierende Sonnenschutzfolie, die auf dem Glassubstrat angeordnet ist, wobei die lichtdiffundierende Sonnenschutzfolie Folgendes aufweist:
eine Mehrschicht-Polymerfolie mit mehreren alternierenden Polymerlagen aus einem ersten Polymermaterial und einem zweiten Polymermaterial, wobei mindestens eine der alternierenden Polymerlagen doppelbrechend und orientiert ist, und wobei die alternierenden Polymerlagen zusammenwirken, um mindestens 50 % des Infrarotlichts zwischen 850 nm und 1100 nm zu reflektieren und mindestens 50 % des sichtbaren Lichts durch die Mehrschicht-Polymerfolie zu übertragen, wobei das erste Polymermaterial Polyethylenterephthalat (PET) oder ein Copolymer von Polyethylenterephthalat (co-PET) aufweist, und das zweite Polymermaterial Polymethylmethacrylat (PMMA) oder ein Copolymer von Polymethylmethacrylat (coPMMA) aufweist; und
eine an die Mehrschicht-Polymerfolie angrenzende lichtdiffundierende Lage oder lichtdiffundierende Oberfläche;
wobei die lichtdiffundierende Sonnenschutzfolie einen entsprechend ASTM D 1003-00 gemessenen Haze-Wert von 10 % oder höher hat; und
wobei die lichtdiffundierende Lage Partikel einschließt, die in einem Bindemittel verteilt sind, wobei die Partikel und das Bindemittel über unterschiedliche Brechungsindexe verfügen,
und die lichtdiffundierende Oberfläche eine strukturierte Oberfläche aufweist, wobei die strukturierte Oberfläche mehrere Erhöhungen und Vertiefungen aufweist, die beliebig oder nicht-beliebig angeordnet sind.

6. Lichtdiffundierende Sonnenschutz-Verglasungseinheit nach Anspruch 5, wobei die lichtdiffundierende Lage Partikel aufweist, die in einem Bindemittel verteilt sind, wobei die Partikel über einen ersten Brechungsindex verfügen, das Bindemittel über einen zweiten Brechungsindex und der zweite Brechungsindex mindestens um den Wert 0,05 größer oder kleiner ist als der erste Brechungsindex.

7. Lichtdiffundierende Sonnenschutz-Verglasungseinheit nach Anspruch 5, ferner mit einem zweiten Glassubstrat, und wobei die lichtdiffundierende Sonnenschutzfolie zwischen dem ersten Glassubstrat und dem zweiten Glassubstrat angeordnet ist.

8. Lichtdiffundierende Sonnenschutz-Verglasungseinheit nach Anspruch 5, wobei die Mehrschichtfolie eine Infrarotlicht reflektierende Mehrschicht-Polymerfolie aufweist, die mehrere abwechselnde Polymerschichten eines ersten Polymermaterials und eines zweiten Polymermaterials aufweist, und mindestens eine der abwechselnden Schichten doppelbrechend und ausgerichtet ist und die abwechselnden Polymerschichten zusammenwirken, um Infrarotlicht zu reflektieren, und sichtbares Licht durch die Infrarotlicht reflektierende Mehrschicht-Polymerfolie durchgelassen wird.

9. Lichtdiffundierende Sonnenschutz-Verglasungseinheit nach Anspruch 5, weiterhin mit einer Infrarotlicht absorbierenden Nanopartikelschicht, die angrenzend an die Mehrlagen-Folie angeordnet ist.

## Revendications

1. Film de protection solaire à diffusion lumineuse comprenant :
un film polymère multicouche incluant une pluralité de couches polymères alternées d'un premier matériau polymère et d'un deuxième matériau polymère, au moins une des couches polymères alternées étant biréfringente et orientée, dans lequel les couches polymères alternées coopèrent pour réfléchir au moins 50 % de lumière infrarouge de 850 nm à 1100 nm et pour transmettre au moins 50 % de lumière visible à travers le film polymère multicouche, dans lequel le premier matériau polymère inclut du polyéthylène téréphtalate (PET) ou un copolymère de polyéthylène téréphtalate (coPET) et le deuxième matériau polymère inclut du poly(méthacrylate de méthyle) (PMMA) ou un copolymère de poly(méthacrylate de méthyle) (coPMMA) ; et
une couche de diffusion lumineuse ou une surface de diffusion lumineuse adjacente au film polymère multicouche ;
où le film de protection solaire à diffusion lumineuse a une valeur de trouble de 10 % ou plus, mesurée selon ASTM D 1003-00 ; et
dans lequel la couche de diffusion lumineuse comprend des particules dispersées au sein d'un liant, dans lequel les particules et le liant ont des indices de réfraction différents ; et
la surface de diffusion lumineuse comprend une surface texturée, dans lequel la surface texturée comprend une pluralité de pics et vallées qui sont placés de manière aléatoire ou de manière non aléatoire.

2. Film de protection solaire à diffusion lumineuse selon la revendication 1, dans lequel les particules ont un premier indice de réfraction, le liant a un deuxième indice de réfraction et le deuxième indice de réfraction est au moins supérieur ou inférieur d'une valeur de 0,05 au premier indice de réfraction.

3. Film de protection solaire à diffusion lumineuse selon la revendication 1, dans lequel le film multicouche comprend un film multicouche polymère réfléchissant la lumière infrarouge comprenant une pluralité de couches polymères alternées d'un premier matériau polymère et d'un deuxième matériau polymère et au moins l'une des couches alternées est biréfringente et orientée et les couches polymères alternées coopèrent pour réfléchir la lumière infrarouge et la lumière visible est transmise à travers le film multicouche polymère réfléchissant la lumière infrarouge.

4. Film de protection solaire à diffusion lumineuse selon la revendication 1, comprenant en outre une couche de nanoparticules absorbant la lumière infrarouge disposée adjacente au film polymère multicouche, dans lequel la couche de nanoparticules absorbant l'infrarouge comprend de l'hexaborure de lanthane, de l'oxyde d'antimoine et d'étain ou de l'oxyde d'indium et d'étain.

5. Unité de vitrage de protection solaire à diffusion lumineuse, comprenant :
un substrat en verre ; et
un film de protection solaire à diffusion lumineuse disposé sur le substrat en verre, le film de protection solaire à diffusion lumineuse comprenant :
un film polymère multicouche incluant une pluralité de couches polymères alternées d'un premier matériau polymère et d'un deuxième matériau polymère, au moins une des couches polymères alternées étant biréfringente et orientée, dans lequel les couches polymères alternées coopèrent pour réfléchir au moins 50 % de lumière infrarouge de 850 nm à 1100 nm et pour transmettre au moins 50 % de lumière visible à travers le film polymère multicouche, dans laquelle le premier matériau polymère inclut du polyéthylène téréphtalate (PET) ou un copolymère de polyéthylène téréphtalate (coPET) et le deuxième matériau polymère inclut du poly(méthacrylate de méthyle) (PMMA) ou un copolymère de poly(méthacrylate de méthyle) (coPMMA) ; et
une couche de diffusion lumineuse ou une surface de diffusion lumineuse adjacente au film polymère multicouche ;
dans laquelle le film de protection solaire à diffusion lumineuse a une valeur de trouble de 10 % ou plus, mesurée selon ASTM D 1003-00 ; et
dans laquelle la couche de diffusion lumineuse comprend des particules dispersées au sein d'un liant, dans laquelle les particules et le liant ont des indices de réfraction différents,
et la surface de diffusion lumineuse comprend une surface texturée, dans laquelle la surface texturée comprend une pluralité de pics et vallées qui sont placés de manière aléatoire ou de manière non aléatoire.

6. Unité de vitrage de protection solaire à diffusion lumineuse selon la revendication 5, dans laquelle la couche de diffusion lumineuse comprend des particules dispersées au sein d'un liant, dans laquelle les particules ont un premier indice de réfraction, le liant a un deuxième indice de réfraction et le deuxième indice de réfraction est au moins supérieur ou inférieur d'une valeur de 0,05 au premier indice de réfraction.

7. Unité de vitrage de protection solaire à diffusion lumineuse selon la revendication 5, comprenant en outre un deuxième substrat en verre et le film de protection solaire à diffusion est disposé entre le substrat en verre et le deuxième substrat en verre.

8. Unité de vitrage de protection solaire à diffusion lumineuse selon la revendication 5, dans laquelle le film multicouche comprend un film multicouche polymère réfléchissant la lumière infrarouge comprenant une pluralité de couches polymères alternées d'un premier matériau polymère et d'un deuxième matériau polymère et au moins l'une des couches alternées est biréfringente et orientée et les couches polymères alternées coopèrent pour réfléchir la lumière infrarouge et la lumière visible est transmise à travers le film multicouche polymère réfléchissant la lumière infrarouge.

9. Unité de vitrage de protection solaire à diffusion lumineuse selon la revendication 5, comprenant en outre une couche de nanoparticules absorbant la lumière infrarouge disposée adjacente au film multicouche.
